## Europäisches Patentamt
## European Patent Office
## Office européen des brevets

(11) Veröffentlichungsnummer: **0 044 581**

**A1**

(12) **EUROPÄISCHE PATENTANMELDUNG**

(21) Anmeldenummer: **81200690.6**

(22) Anmeldetag: **19.06.81**

(51) Int. Cl.³: **F 02 C 6/16**
**B 65 G 5/00**

(30) Priorität: **23.07.80 CH 5606/80**

(43) Veröffentlichungstag der Anmeldung:
**27.01.82 Patentblatt 82/4**

(84) Benannte Vertragsstaaten:
**CH DE GB LI SE**

(71) Anmelder: **BBC Aktiengesellschaft Brown, Boveri & Cie.**

**CH-5401 Baden(CH)**

(72) Erfinder: **Zaugg, Paul**
**Hirzemätteli 5**
**CH-5400 Baden(CH)**

(54) Verfahren und Einrichtung zur Vermeidung des Ausblasens der Wasservorlage von Gleichdruckluftspeicheranlagen für Gasturbinenkraftwerke.

(57) Verfahren und Einrichtung zur Vermeidung des Ausblasens der Wasservorlage von Gleichdruckluftspeicheranlagen für Gasturbinenkraftwerke, wobei die mit gelöster Luft angereicherte oberflächennahe Wasserschicht in der Kaverne über ein Röhrensystem abgesaugt und durch eine Entlüftungseinrichtung in die oberflächennahe Schicht des Ausgleichsbeckens gefördert wird.

FIG. 1

EP 0 044 581 A1

- 1 -

Verfahren und Einrichtung zur Vermeidung des Ausblasens
der Wasservorlage von Gleichdruckluftspeicheranlagen für
Gasturbinenkraftwerke

Die vorliegende Erfindung betrifft ein Verfahren und eine
Einrichtung zur Vermeidung des Ausblasens der Wasservorlage von Gleichdruckluftspeicheranlagen für Gasturbinenkraftwerke nach dem Oberbegriff der Patentansprüche 1 und
2.

Gleichdruckluftspeicheranlagen für Gasturbinenkraftwerke
benötigen gegenüber gleich leistungsfähigen Luftspeicheranlagen mit variablem Luftdruck, der im Betrieb zwischen gewissen Grenzen schwanken darf, nur etwa ein Drittel des
Volumens der letzteren. Dementsprechend sind der bauliche
Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine das in der Kaverne verbrauchte Luftvolumen
ausgleichende Wasservorlage mit einer Wassersäule, die in
ein freies, gewöhnlich an der Erdoberfläche liegendes Bas-

- 2 -

sin mündet und deren statische Druckhöhe dem in der Kaverne aufrechtzuerhaltenden Druck entspricht. Beim Laden der Kaverne, die bei heutigen Anlagen in 600-800 m Tiefe liegt, entsprechend einem statischen Druck der Wassersäule von 60-80 bar, wird das Wasser in das Bassin hinaufgedrückt, beim Entladen läuft das Wasser aus dem Bassin in die Kaverne nach, um den gleichen Druck sicherzustellen.

Beim Betrieb von Luftspeichergasturbinenanlagen hat sich gezeigt, dass beim Laden der Kaverne die in der Wasservorlage aufsteigende Wassersäule die in ihr gelöste Luft freigibt, wodurch Luftblasen mit nach oben hin rasch zunehmendem Volumen entstehen, die eine Dichteabnahme in der Wassersäule und damit einen Druckabfall in der Kaverne bewirken. Im Extremfall könnte die Wassersäule vom Druckluftpolster ausgeblasen werden und die Kaverne sich somit vollständig entleeren.

Gegenüber der normalen Lösungsgeschwindigkeit von Luft in ruhendem Wasser erfolgt in der Kaverne die volle Sättigung infolge der starken Verwirbelung des Wassers bei den Lade- und Entladevorgängen rascher, da hierbei bald einmal alle Wasserteilchen mit der Luft in Berührung kommen. Die dabei vom Wasser aufgenommene Gewichtsmenge an Luft ist proportional dem Druck, der, wie gesagt, bei ausgeführten Anlagen zwischen 60 und 80 bar liegt. Ueber die dabei gelöste Luftmenge gibt folgender Vergleich Aufschluss:

Bei 1 bar Luftdruck und $10^{\circ}C$ Temperatur enthält 1 $m^3$ Wasser (= 1000 kg) 29,2 g Luft.

Bei 60 bar Druck und $10^{\circ}C$ Temperatur enthält 1 $m^3$ Wasser 1,7 kg Luft, also die etwa 58-fache Gewichtsmenge. Bei Atmosphärendruck entsprechen diese 1,7 kg Luft ca. 1,32 $m^3$.
Ein von 60 bar Druck auf atmosphärischen Druck entspanntes
Wasser/Luft-Gemisch enthält also mehr Luft als Wasser.

Wenn derart mit Luft gesättigtes Wasser aus der Kaverne nach oben steigt, so wird durch den abnehmenden hydrostatischen Druck die Luft frei und bildet immer grössere Blasen. Die durchschnittliche Dichte der Wassersäule wird damit immer kleiner und der Druck in der Kaverne sinkt entsprechend. Dies kann, wenn nicht entsprechende Vorkehrungen getroffen werden, zum Ausblasen des Druckluftpolsters mit der Wassersäule führen.

Eine bisher bekanntgewordene Massnahme zur Verhütung dieses Ausblasens besteht darin, das die Wassersäule enthaltende Steigrohr in einem U-förmigen Bogen unter die Sohle der Kaverne hinab zu verlängern. Der tiefste Punkt des Steigrohrs muss dabei um mindestens 0,15 h unter dem jeweiligen Wasserspiegel in der Kaverne liegen, wobei h die wirksame Druckhöhe, d.h., die Differenz zwischen den geodätischen Höhen des Oberwasserspiegels im Ausgleichsbecken und des Kavernenwasserspiegels bedeutet.

Für h = 600 m würde dies bedeuten, dass das bereits 600 m lange Steigrohr noch um mindestens 90 m tiefer geführt werden müsste, und zwar doppelt, was einen untragbar hohen baulichen Mehraufwand darstellt.

Andere Vorschläge zielen darauf ab, mit Hilfe einer Schutzschicht auf der Wasseroberfläche, beispielsweise einer Folie, einer schwer verdunstenden Flüssigkeitsschicht oder einer Schicht kleiner, eine zusammenhängende Abdeckung bildender Schwimmkörper, den Kontakt zwischen Luft und Wasser ganz oder teilweise zu unterbinden. Ein weiterer Vorschlag geht dahin, das in der Wasservorlage rasch aufsteigende Wasser/Luft-Gemisch zu bremsen und durch zweckentsprechende Einbauten die Luftblasen vom Wasser zu trennen. Die ideale Methode, nämlich die vollständige Unterbindung des Kontaktes zwischen Luft und Wasser an der Wasseroberfläche lässt sich praktisch sehr schwer realisieren und ob die übrigen Methoden verhindern können, dass, besonders nach längeren Stillständen, mehr oder weniger spontane Luftausscheidungen in der Wasservorlage entstehen, welche die Wassersäule zum Schwingen bringen, bleibt abzuwarten. Solche Schwingungen verursachen Druckschwankungen in der gespeicherten Luft, die sich in erster Linie störend auf den Verdichterbetrieb auswirken können.

Mit der vorliegenden, im kennzeichnenden Teil der Patentansprüche 1 und 2 definierten Erfindung sollen die vorerwähnten Nachteile der bekannten Lösung vermieden werden.

Die Erfindung wird im folgenden unter Bezugnahme auf in der Zeichnung dargestellte Ausführungsbeispiele näher beschrieben.

In der Zeichnung stellen dar:

Fig. 1    einen Vertikalschnitt durch eine Ausführungsform der Einrichtung,

Fig. 2    einen Horizontalschnitt durch die Kaverne oberhalb der Wasserlinie,

Fig. 3    das Ausgleichsbecken einer anderen Ausführungsform der Einrichtung, und

- 5 -

Fig. 4  ein Detail der Einrichtung.

Das erfindungsgemässe Verfahren besteht darin, dass die
hauptsächlich mit Luft angereicherte, oberflächennahe Wasserschicht in der Kaverne über ein Rohrsystem dauernd abgesaugt und an die Wasseroberfläche des Ausgleichsbeckens
gepumpt wird, wo es wegen des niedrigeren Druckes die gelöste Luft abgibt. Das abgesaugte Wasser wird dabei über
das Steigrohr der Wasservorlage kontinuierlich durch entlüftetes Wasser aus dem Ausgleichsbecken ersetzt. Im Steigrohr befindet sich demnach nur entlüftetes Wasser, da aus
der Kaverne keine Luft in das Steigrohr hineindiffundieren
kann.

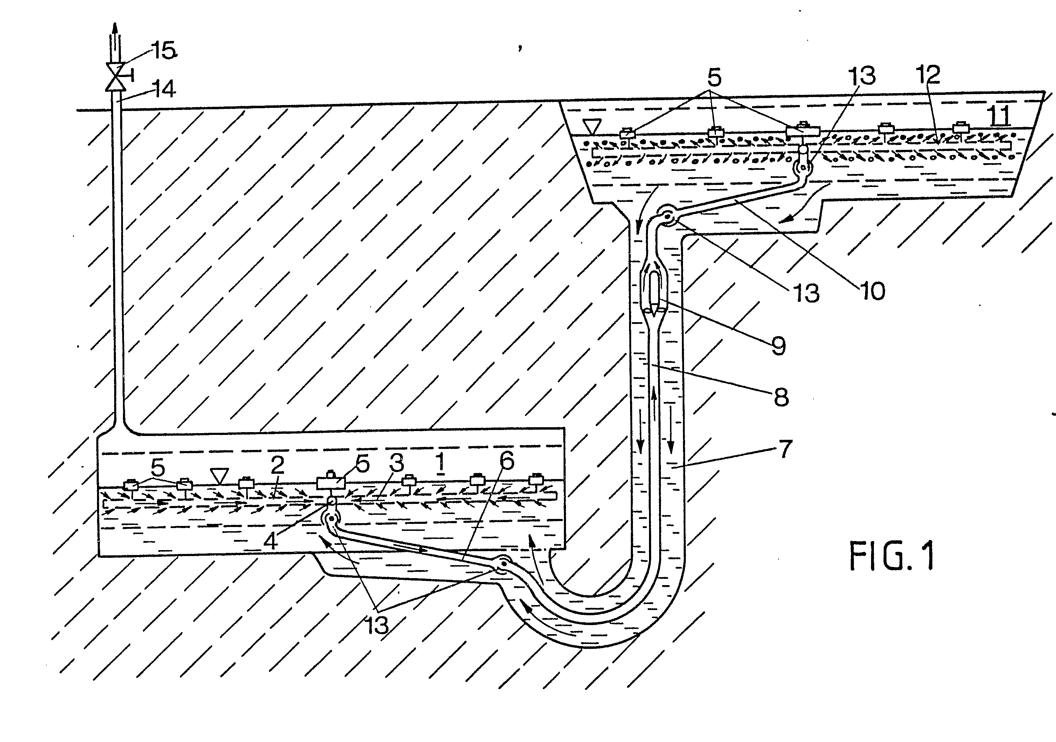

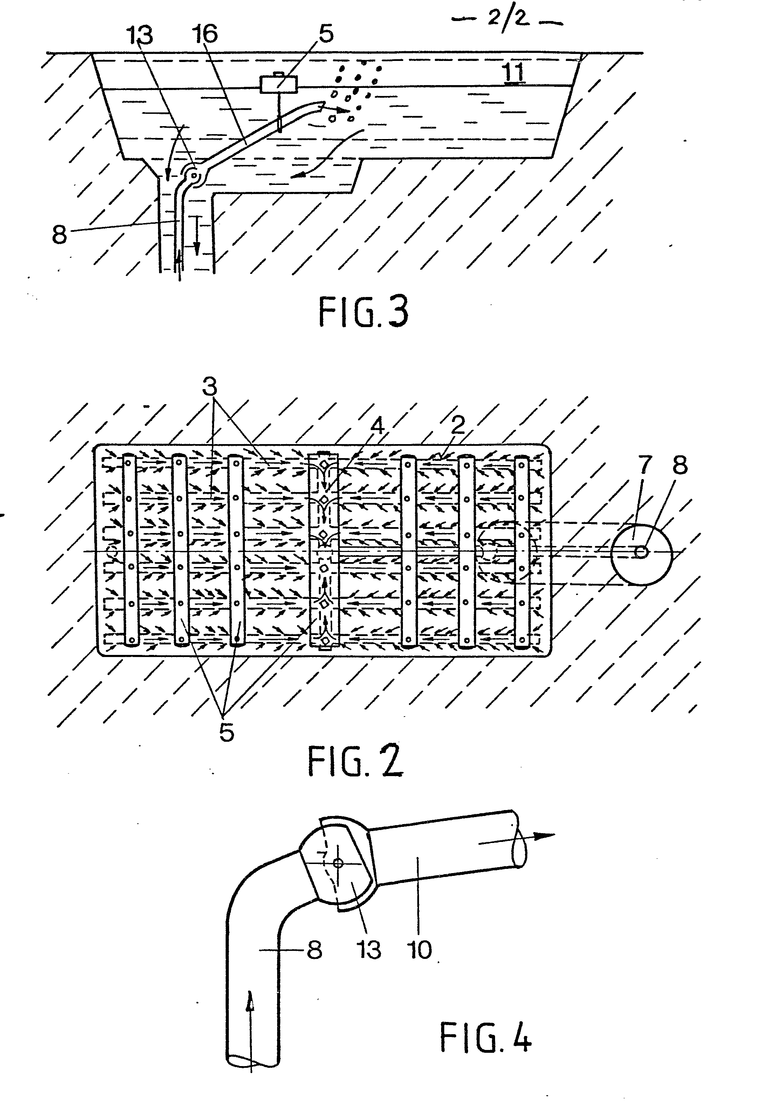

Die in Fig. 1 gezeigte Einrichtung zur Realisierung dieses
Verfahrens weist in der Kaverne 1 einen auf der Wasseroberfläche schwimmenden Röhrenrost 2 auf, der sich aus einer
Anzahl perforierter, vorzugsweise aus Kunststoff bestehender Rohre 3, einem in der Mitte der Längenausdehnung angeordneten Sammelrohr 4 und aus einer Anzahl von Schwimmern 5
zusammensetzt. Die Rohre 3 münden in das ebenfalls vorzugsweise aus Kunststoff bestehende Sammelrohr 4, siehe Fig. 2,
aus dem aus der oberflächennahen Schicht abgesaugtes Wasser
über ein Pendelrohr 6 und ein im Steigrohr 7 fixiertes Absaugrohr 8 durch eine Pumpe 9 über ein weiteres Pendelrohr
10 in die oberflächennahe Wasserschicht des Ausgleichsbeckens 11 gefördert wird.

Die Entlüftung des aus der Kaverne abgesaugten lufthaltigen
Wassers kann im Ausgleichsbecken 11 ebenfalls durch einen
Röhrenrost 12 erfolgen, der prinzipiell gleich ausgeführt
ist wie der Röhrenrost 2 in der Kaverne. Er steht über das
Pendelrohr 10 mit dem Absaugrohr 8 in Verbindung.

Die Schwimmer 5 der Röhrenroste 2 und 12 halten diese in konstantem Abstand vom jeweiligen Wasserspiegel, wobei die mit Kugelgelenken 13, siehe auch Fig. 4, an die Röhrenroste 2, 12 bzw. an das Absaugrohr 8 angeschlossenen Pendelrohre 2, 10 laufend eine ungehinderte Anpassung der Röhrenroste an den wechselnden Wasserstand in der Kaverne und im Ausgleichsbecken ermöglichen. Da sowohl die Eintrittsöffnungen im Röhrenrost 2 der Kaverne 1 als auch die Austrittsöffnungen im Röhrenrost 12 des Ausgleichsbeckens 11 stets im Wasser eingetaucht bleiben, hat die Pumpe 9 nur die Rohrreibung, aber keinen geodätischen Höhenunterschied zu überwinden, weshalb die erforderliche Pumpenleistung verhältnismässig klein ist.

Die aus der Kaverne 1 nach oben führende dünne Leitung 14 mit dem Ventil 15 dient zur Verbindung der Kaverne mit dem Verdichter der Gasturbineneinheit während der Ladeperiode bzw. zur Verbindung der Kaverne mit der Gasturbine während der Arbeitsperiode des Luftspeicherkraftwerks.

Da bei laufender Absaugung der Luftgehalt des in das Ausgleichsbecken geförderten Wassers klein ist, wird die entweichende Luft an den Mündungen des Röhrenrostes im Ausgleichsbecken nur eine geringe Sprudelwirkung hervorrufen, so dass in den meisten Fällen auf eine so grossflächige Verteilung des Luftaustritts verzichtet werden kann. In diesen Fällen genügt es, gemäss Fig. 3 ein einseitig offenes Pendelrohr 16 zu verwenden, dessen Mündung von einem Schwimmer 5 in gleichem Abstand unter dem Wasserspiegel des Ausgleichsbeckens gehalten wird.

Die Absaugeeinrichtung braucht hauptsächlich nur bei stillstehender Speicheranlage, also über das Wochenende und bei Revisionen ohne Speicherentleerung, im Betrieb zu sein.

- 7 -

Während normaler Arbeitstage, an denen täglich praktisch der ganze Wasserinhalt der Luftkaverne ins Ausgleichsbekken gelangt, wo er entlüftet wird, kann sie eventuell ausser Betrieb bleiben.

Anstelle der gelenkig mit dem Absaugrohr 8 verbundenen Pendelrohre 6, 10 und 16 können auch flexible Leitungen oder Schläuche verwendet werden.

69/80
0044581

# B e z e i c h n u n g s l i s t e

1   Kaverne

2   Röhrenrost

3   Rohre

4   Sammelrohr

5   Schwimmer

6   Pendelrohr

7   Steigrohr

8   Absaugrohr

9   Pumpe

10  Pendelrohr

11  Ausgleichbecken

12  Röhrenrost

13  Kugelgelenke

14  Leitung zum Laden und Entladen der Kaverne

15  Ventil

16  offenes Pendelrohr

Patentansprüche

1. Verfahren zur Vermeidung des Ausblasens der Wasservorlage von Gleichdruckluftspeicheranlagen für Gasturbinenkraftwerke, die eine unterirdische Kaverne zur Speicherung der Druckluft und Verbindungsleitungen zwischen der Kaverne und dem Verdichter bzw. der Gasturbine, ferner ein Ausgleichsbecken und ein dasselbe mit der Kaverne verbindendes Steigrohr aufweisen, dadurch gekennzeichnet, dass die mit gelöster Luft angereicherte oberflächennahe Wasserschicht in der Kaverne abgesaugt und zwecks Entlüftung in die oberflächennahe Wasserschicht des Ausgleichsbeckens gefördert wird.

2. Einrichtung zur Durchführung des Verfahrens nach Anspruch 1, gekennzeichnet durch einen in der Kaverne (1) vorgesehenen schwimmfähigen Röhrenrost (2) mit Absaugöffnungen, ein im Steigrohr (7) vorgesehenes Absaugrohr (8), eine Pumpe (9), eine schwimmfähige Entlüftungseinrichtung (12, 16) im Ausgleichsbecken (11) sowie durch bewegliche, den Auf- und Abbewegungen des Röhrenrostes (2) und der Entlüftungseinrichtung (12, 5+ 16) folgende Verbindungsleitungen (6, 10, 16) zwischen dem Absaugrohr (8) und dem Röhrenrost bzw. der genannten Entlüftungseinrichtung.

3. Einrichtung nach Anspruch 2, dadurch gekennzeichnet, dass der Röhrenrost (2) eine Mehrzahl untereinander paralleler perforierter Rohre (3), ein Sammelrohr (4), in das diese Rohre (3) münden, sowie eine Mehrzahl von Schwimmern (5) aufweist, dass die Entlüftungseinrichtung (12) in gleicher Weise aufgebaut ist wie der Röhrenrost (2), und dass das Absaugrohr (8) durch Pendelrohre (6, 10) mit dem Röhrenrost (2) bzw. mit der Entlüftungseinrichtung (12) verbunden ist.

4. Einrichtung nach Anspruch 2, dadurch gekennzeichnet, dass die Entlüftungseinrichtung im Ausgleichsbecken (11) aus einem Schwimmer (5) und einem daran aufgehängten, einseitig offenen Pendelrohr (16) besteht.

FIG.1

0044581

FIG. 3

FIG. 2

FIG. 4

0044581

Europäisches
Patentamt

**EUROPÄISCHER RECHERCHENBERICHT**

EP 81 20 0690

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| A | DE - A - 2 321 533 (RIGOLLOT) | | | F 02 C 6/16 B 65 G 5/00 |
| A | EP - A - 0 006 086 (ZEMAN) | | | |
| A | DE - A - 2 304 783 (ATOMENERGI) | | | |
| A | DE - B - 1 033 139 (EDHOLM) | | | |

RECHERCHIERTE SACHGEBIETE (Int. Cl.³)

F 02 C
B 65 G

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

Der vorliegende Recherchenbericht wurde für alle Patentansprüche erstellt.

| Recherchenort | Abschlußdatum der Recherche | Prüfer |
|---|---|---|
| Den Haag | 21-10-1981 | IVERUS |

EPA form 1503.1   06.78